# EUROPEAN PATENT APPLICATION

(11) **EP 3 699 326 A1**
(43) Date of publication of application: **26.08.2020**
(21) Application number: 19425008.0
(22) Date of filing: 25.02.2019
(51) Int. Cl.: C25D 1/06, B29D 11/00, G02B 5/08

(54) **METHOD OF MANUFACTURING A MIRROR AND MIRROR COMPRISING A REFLECTING LAYER, A BONDING LAYER AND A STRUCTURAL LAYER**

(71) Applicant: Valenzuela Technologies Srl, 23900 Lecco LC (IT)
(72) Inventor: Valenzuela, Arnoldo, C1055 Caba Buenos Aires (AR); Valenzuela, Carlos Alberto, 81827 München (DE)
(74) Representative: Mahler, Peter

(57) **Abstract**

The present invention is related to a method of manufacturing a mirror. The objective of the present invention is to propose very thin, mechanically and thermally stable mirrors with excellent surface properties as well as a manufacturing process for such mirrors. The method of manufacturing a mirror in accordance with the invention comprises the steps of:
(a) Providing a mandrel having the negative shape of the mirror;
(b) Applying a reflecting layer of reflective material on the mandrel surface;
(c) Applying a bonding layer of bonding material on the reflective material;
(d) Applying a structural layer of structural material on the bonding layer; and
(e) Releasing the mirror from the mandrel.

In particular, the reflecting material may be Gold, Iridium, Rhodium or Nickel, the bonding material may be Nickel, Nickel Cobalt or Nickel alloys, and the structural material may be Titanium or Titanium alloys.

## Description

The present invention is related to a method of manufacturing a mirror and a mirror comprising a reflecting layer, a bonding layer and a structural layer. It is also related to the use of such a mirror.

The production of high quality mirrors, in particular for telescope applications, is a challenge. The surface quality must be excellent, and the supporting mirror shell must be mechanically and thermally stable.

Mirrors for space applications must be able to support huge mechanical stress during the rocket launch phase. However, there are weight and volume limitations with regard to the limited cargo capacity of the launcher.

In addition, the mirrors are subject to huge temperature differences. Apart from the optical inconveniences caused by thick mirror shells, thermal stress due to temperature changes causes temporary mirror deformations and a loss in optical performance.

Such mirrors are oftentimes used for telescopes in nested designs and under grazing incidence. Thus, apart from weight limitations, the thickness of the mirror shell also reduces the effective aperture of a telescope considerably. The angular resolution on the entire field of view of nested grazing incidence telescopes that can be reached with current technologies are about 10 arcsec HEW (Half-Energy Width). However, for specific applications, angular resolutions on the entire field view of better than 10 arcsec HEW would be desirable.

Current X-ray telescopes have mirror systems made of replicated nickel shells. These mirrors have now reached the mass limits of the launching rocket due to their high density materials.

Mirrors for the applications described above are produced in a replication process by depositing a reflecting layer, e.g. gold, on a mandrel and subsequently depositing a shell layer of nickel using an electroforming process. A typical thickness of a nickel layer with suitable physical properties for the described applications is between 0,2 and 1,2 mm, depending on the size of the shell. For lunar based radio telescopes, a layer of nickel may be used as reflecting layer.

The reflecting layer is deposited under vacuum conditions by vaporizing the reflective material on a mandrel. The mandrel has a suitable surface shape and is super-polished in several cycles to a surface roughness of better than 10 angstrom.

To achieve excellent optic qualities and allow the separation of the finalized mirror form the mandrel, a process may be used that is described e.g. in SPIE Vol. 10565 1056558-4.

The gold-plated mandrel is then coated with nickel in an electro-forming bath using nickel sulphamate. The finished mirror is separated from the mandrel by cooling down the mandrel with liquid nitrogen. The difference in the thermal expansions of the materials and the difference in adhesion of the gold layer between the mandrel surface and the electrolytic nickel allow the separation of the mirror and its shell from the mandrel.

The reflecting layer is now on the shell surface. The optical quality of the nickel surface behind the reflecting layer is sufficient to maintain the surface quality of the reflecting surface deposited on the mandrel surface.

A nickel shell provides both, the necessary mechanical stability and surface quality, but the shell is relatively thick and heavy.

The demand for larger collecting areas, e.g. in grazing incidence X-ray telescopes or normal incidence lunar radio telescopes, within the mass and volume limits of the launcher creates the need for light-weight very thin mirror materials.

Furthermore, lunar telescopes, which may be normal incidence radio telescopes (millimeter or submillimeter telescopes) being placed on the moon for observation, impose limitations not only to the weight but also to the required volume in the launcher. Lunar telescopes may use a honeycomb sandwich structure to provide the necessary support when operating on the moon. Even though gravity on the moon is only 1/6 of the earth's gravity, still the mass of the telescope has to be supported on the moon. This means that the sandwich structure has to be strong enough, thus increasing the volume necessary for the support structure.

There is therefore a need to reduce the volume of the supporting sandwich structure for such lunar telescopes, without weakening the support structure and without increasing its weight.

The objective of the present invention is to propose very thin, mechanically and thermally stable mirrors with excellent surface properties as well as a manufacturing process for such mirrors.

The objective of the invention is met with a method of manufacturing a mirror comprising the steps of:
(a) Providing a mandrel having the negative shape of the mirror;
(b) Applying a reflecting layer of reflective material on the mandrel surface;
(c) Applying a bonding layer of bonding material on the reflective material;
(d) Applying a structural layer of structural material on the bonding layer; and
(e) Releasing the mirror from the mandrel.

The manufacturing process in accordance with the present invention is based on a replication process from polished masters. The mandrel shall have the negative form of the mirror and preferably a very high surface quality, highly polished to have a roughness of 10 Angstrom or less, and preferably of 4 Angstrom or less. The surface quality of the mandrel defines the surface quality of the reflecting layer.

A reflecting layer of reflective material is then applied on the mandrel surface, preferably by generally known vacuum deposition techniques. The reflecting layer is preferably made of Gold, Iridium or Rhodium. The reflecting layer may also be made of nickel, e.g. for lunar based radio telescopes. The reflecting layer may also be a multilayer-coating.

The reflecting layer may in particular be applied up to a thickness of 0,25 µm.

Optionally, the mandrel may be coated with a thin layer of Gold to allow easy separation of the mirror form the mandrel once it is complete, and to provide an optical coating at the same time. Such a known process is described e.g. in SPIE Vol. 10565 1056558-4.

In the next step, a bonding layer of bonding material is applied on the reflective material. In particular, the bonding material may be Nickel, Nickel Cobalt or Nickel alloys. The materials may be applied by electrodeposition techniques.

The aforementioned materials are currently used for conventional mirrors produced by electroforming techniques. The materials have proven to maintain the high surface quality of the reflecting layer when they are applied to the back of the layer. However, the materials only provide sufficient mechanical stability when the layer is relatively thick, so that mirrors produced by this technology are heavy, and the aperture of telescopes using such mirrors, in particular under grazing incidence, are reduced.

In accordance with the present invention, the bonding layer is hence applied in a relatively thin layer, in particular in a thickness between 0,5 µm and 3 µm, and in particular not less than 0,2 µm. Such bonding layer is sufficient to maintain, as carrier, the excellent optical surface qualities of the released replicated reflecting layer. However, the thin bonding layer will not provide sufficient mechanical stability to achieve a stable mirror.

The desirable thickness of the electroformed bonding layer, in particular consisting of Nickel, is determined considering that it has to guarantee the preservation of the optical quality from the mandrel replicated onto the reflecting layer maintaining its roughness quality and its surface figure quality after separation. Since the bonding layer increases the total mass of the mirror considerably, it is recommended to maintain its thickness between 1 µm and 3 µm.

To obtain the characteristics of the bonding layer that guarantee the preservation of the roughness quality and the surface figure quality, i.e. the optical surface quality, of the reflecting layer, the bonding layer can preferably be deposited on the reflecting layer with a deposition rate of between 1,5 and 180 µm/h, and preferably with less than 25µm/h, and in particular less than 10 µm/h.

Preferably, in order to obtain the necessary characteristics of the bonding layer, the Nickel can initially be deposited with very slow deposition rates, e.g. 1,5 µm/h, to insure very small Ni-crystallization grains at the beginning of the process that will not degrade the optical quality of the reflecting layer. The deposition rate may increase during the deposition process of the bonding layer. Later in the process, faster deposition rates, e.g. 25 µm/h, may be used to accelerate the process, which, however, produce larger Ni-crystallization grains.

If the requirements for the optical quality of the reflecting layer are less stringent, i.e. if a good surface quality of the bonding layer is enough, then faster deposition rates may be used from the beginning, such as 25 µm/h.

At the end of the deposition process of the bonding layer, the deposition rate may decrease, and slower rates may be used to provide small Ni-crystallization grains for improving the interfacing with the Titanium structure. In other words, by controlling the Ni-deposition rate, the granularity of the bonding layer is controlled which has a direct effect on how precise the optical quality of the reflecting layer is preserved.

The optical quality of the reflecting layer, which is defined by its surface roughness and surface figure quality, determines the angular resolution of the field of view of grazing incidence telescopes as well as the angular resolution on the entire field of view that may be achieved for nested grazing incidence telescopes. That means that by controlling the Ni-deposition rate as described above, the invention allows to achieve angular resolutions of the field of view of grazing incidence telescopes as well as the angular resolution on the entire field of view of nested grazing incidence telescopes of much better than 10 arcsec, in particular of better than 5 arcec, preferably 3 arcsec HEW (Half-Energy Width).

The bonding layer not only maintains the overall optical characteristics of the replicated reflecting layer, i.e. the roughness and the surface figure quality, but may also serve as the cathode to allow electroforming of the adjacent structural layer.

To achieve a mechanically stable mirror, the invention proposes to apply a structural layer of structural material on the bonding layer. The structural layer may consist of any material that provides high mechanical stability in relatively thin layers and adheres to the bonding layer. The structural material may in particular be Titanium or a Titanium alloy. Such materials may be deposited, preferably by electrodeposition techniques, on the back of the bonding layer. Alternatively, such materials may also be deposited with 3D printing methods.

Structural materials like Titanium or Titanium alloys provide excellent physical properties, and already thin layers provide a very high mechanical stability. A structural layer of Titanium or a Titanium alloy may preferably be applied in a layer thickness of at least 10 µm, and up to 2 mm.

The thickness of the structural layer may be chosen depending on the application of the mirror and the necessary mechanical stability to guaranty the optical quality of the replicated reflecting layer. For lunar based radio telescopes, the honeycomb sandwich structure serving as support structure may be replaced by the much thinner structural layer of the present invention.

The bonding layer between the reflecting layer and the structural layer provides a good bonding between the structural layer and the reflecting layer, whereas the surface properties of the structural layer cannot interfere with the quality of the mirror surface.

The structural layer may be deposited on the bonding layer by continuous electrodeposition or by pulsed electrodeposition, or a combination thereof. For example, the structural layer may be applied in a first step by pulsed and in a second step by continuous electrodeposition.

In order to further support the bonding layer in maintaining the optical quality of the replicated reflecting layer, the structural layer may, at the beginning of the process, be deposited on the bonding layer by pulsed electrodeposition to insure very small crystalline grain sizes that will not degrade the optical quality of the released replicated reflecting layer through the bonding layer. Later in the electrodeposition process, when increasing the structural stability, the structural layer may be deposited by continuous electrodeposition, which leads to larger crystalline grain sizes. Using continuous electrodeposition also accelerates the process, thus reducing production costs.

By applying pulsed electrodeposition at the beginning of the process as described above, the invention allows to further improve the angular resolutions of the field of view of grazing incidence telescopes as well as the angular resolution on the entire field of view of nested grazing incidence telescopes achieving values much better than 10 arcsec, in particular of better than 5 arcec, preferably 3 arcsec HEW.

The structural layer may be applied in an electrolytic bath of an acidic solution of Titanium alloy salts, in particular Potassium titanate dissolved in a sulfuric acid solution.

The electrodeposition process used to apply the structural layer may use an anode consisting of Titanium and/or Titanium alloy. The anode may contain Platinum that acts as catalyst to accelerate the oxidation process of the Titanium.

Once the structural layer is applied on the mirror and the process is completed, the mirror may be released from the mandrel thermally, thanks to the difference between the master and shell coefficients of thermal conduction. The difference in adhesion of the Gold layer between the mandrel surface and the electrolytic nickel ensure a clean interface separation at the original mandrel's outer surface, this substantially reproducing the master's optical surface quality onto the mirror.

When the mirror is separated from the mandrel, an additional coating may be applied to the mirror surface, like e.g. a Gold coating or a multilayer coating.

The objective of the invention is also met with a mirror comprising a reflecting layer, a bonding layer and a structural layer. Conventional mirrors only comprise a structural layer that is directly applied on the backside of the reflecting layer. The problem in such cases is that only specific materials can be bonded directly to the reflecting layer, and that the surface properties of lots of materials interfere with the necessary optical qualities of the mirror surface. Materials that are mechanically and thermally particular stable oftentimes cannot be applied directly to the reflective layer, either because they do not adhere sufficiently to the reflective material or because their surface quality is not sufficient.

The invention solves this issue with an additional bonding layer that is applied between the reflecting and structural layers. Thus, e.g. Titanium or a Titanium Alloy may be used as material for the structural layer. The high stability of such materials allows the production of very thin and lightweight mirrors. Such materials would not easily adhere directly to the materials typically used for the reflecting layer, such as e.g. Gold, Iridium or Rhodium. In addition, due to the properties of the materials used for the structural layer, the characteristics of the structural layer are not sufficient to maintain the high optical surface qualities that may be achieved for the replicated reflecting layer, in particular a roughness of less than 10 Angstrom, and in particular of less than 4 Angstrom.

In accordance with the invention, e.g. Nickel, Nickel Cobalt or a Nickel alloy, materials that in conventional mirrors form the structural element, may form a relatively thin bonding layer of less than 3 µm. The bonding layer only serves to guarantee the preservation of the roughness quality and the surface figure quality, i.e. the optical surface quality, of the replicated reflecting layer by supporting the reflecting layer, and as support for adhering properly to a structural material, such as Titanium, with better mechanical properties so that the support structure may be much lighter than a conventional structure consisting of e.g. Nickel. It is understood that the bonding layer may also be thicker than 3 µm as indicated above, but only thin layers provide the full advantages of the present invention, in particular very light and thin mirrors.

The mirrors in accordance with the present invention may advantageously be used for the assembly of a telescope, in particular in a nested design with grazing incidence mirrors, or for a telescope with normal incidence mirrors. The present invention allows to improve the angular resolutions of the field of view of such grazing incidence telescopes as well as the angular resolution on the entire field of view of such nested grazing incidence telescopes achieving values much better than 10 arcsec, in particular of better than 5 arcec, preferably 3 arcsec HEW. The present invention further allows to reduce the volume requirements for normal incidence lunar based radio telescopes.

Embodiments of the present invention are described in the following section. The ranges of values shall illustrate preferred ranges but in no way limit the invention to the given ranges.

A mirror in accordance with the present invention may be manufactured with the following method:
A mandrel is provided that has the negative form of the mirror to be produced and that has a surface roughness of less than 4 Angstrom.

A reflecting layer of 0,25µm of Gold is applied to the mandrel surface by vacuum deposition. Alternatively, Iridium or Rhodium may be used.

Then, a bonding layer of 0,5 µm of Nickel is applied to the reflecting layer by electrodeposition. Alternatively, Nickel Cobalt or Nickel alloys may be used. The layer should have a minimum thickness of 0,2 µm and may be up to 3 µm thick. The deposition rate of the electrodeposition process is adjusted to 10 µm/h. In general, deposition rates between 1,5 and 180 µm/h may be used.

The Ni-deposition rate may be controlled during the electrodeposition process in order to control the granularity of the bonding layer. The grain size of the bonding layer at the reflecting layer has a direct effect on how precise the optical quality of the replicated reflecting layer may be preserved. Therefore, smaller deposition rates, e.g. 1,5 µm/h, may be used at the beginning of the process to insure small Ni-crystallization grains that will not degrade the optical quality of the reflecting layer. Later on in the process a larger deposition rates, e.g. 25 µm/h, may be used to accelerate the process, which, however, produce larger Ni-crystallization grains.

In the next step, a structural layer of 2mm of Titanium is applied to the bonding layer by electrodeposition. Alternatively, Titanium alloys may be used. Depending on the future use of the mirror and the necessary stability, the layer thickness may start at 10 µm.

The structural layer is applied in an electrolytic bath of an acidic solution of Titanium alloy salts, in particular Potassium titanate dissolved in a sulfuric acid solution.

The electrodeposition process of the structural layer uses an anode consisting of Titanium alloy. Alternatively, the anode may in addition comprise or completely consist of Titanium. In addition, the anode may contain Platinum that acts as catalyst to accelerate the oxidation process of the Titanium.

The voltage applied in the electrodeposition process of the structural layer is between 1V and 4V, and/or the temperature of the electrolytic bath is between 80°C and 90°C.

In one embodiment, the structural layer is applied by continuous deposition, with a deposition rate of at least 40 µm/h. The deposition rate may be raised to 100 µm/h and more, depending on the material, the desired thickness and the future use of the mirror. Such direct continuous deposition leads to a Ti-metal alloy crystalline deposition with large grain sizes of the order of 5000-50000 nm.

In another embodiment, the structural layer is applied by pulsed electrodeposition, with pulse frequencies of less than 900 Hz. The pulse current includes an "ON" time and an "OFF" time that yields improvements in the density across the electroformed surface and uniformity of its thickness. In addition, re-nucleation of each pulse increases the number of grains resulting in grain reinforcement and nano structure build up.

The deposition rate in this case should be at least 8 µm/h, and may be raised up to 80 µm/h or more. The current density is between 1,2 and 1,7 A/m². The pulse ON time is between 0,2 and 2,0 ms, and the pulse OFF time is between 0,5 and 2,0 ms, a duty cycle being in the range from 10% to 50%. Such pulsed electrodeposition leads to Ti-metal alloy in nanocrystalline deposition with smaller grain size that the direct continuous deposition.

In a third embodiment, the structural layer is applied in a first step by pulsed and in a second step by continuous electrodeposition. The above parameters indicate useable ranges for the respective values.

When all layers are completed, the finalized mirror may be released from the mandrel. This is performed by cooling down the mandrel core, so that the thermal shrinkage of the core disengages the reflecting layer together with the bonding and structural layers of the mirror from the mandrel.

## Claims

1. Method of manufacturing a mirror comprising the steps of:
(a) Providing a mandrel having the negative shape of the mirror;
(b) Applying a reflecting layer of reflective material on the mandrel surface;
(c) Applying a bonding layer of bonding material on the reflective material;
(d) Applying a structural layer of structural material on the bonding layer; and
(e) Releasing the mirror from the mandrel.

2. Method in accordance with claim 1, **characterized in that** the mandrel surface is highly polished with a surface roughness of 10 Angstrom or less, in particular of 4 Angstrom or less.

3. Method in accordance with claim 1 or 2, **characterized in that** the reflecting material is selected from the group consisting of Gold, Iridium, Rhodium and Nickel, and is applied up to a thickness of 0,25 µm.

4. Method in accordance with any one of claims 1 to 3, **characterized in that** the bonding material is Nickel, Nickel Cobalt or Nickel alloys.

5. Method in accordance with any one of claims 1 to 4, **characterized in that** the bonding material is applied by electrodeposition techniques.

6. Method in accordance with any one of claims 1 to 5, **characterized in that** the bonding layer is applied in a thickness of at least 0,2 µm, and preferably between 0,5 µm and 3 µm.

7. Method in accordance with claim 5 or 6, **characterized in that** the deposition rate of the bonding layer is 1,5 to 180 µm/h, preferably less than 25µm/h, and in particular less than 10 µm/h.

8. Method in accordance with any one of claims 5 to 7, **characterized in that** the deposition rate increases during the deposition process of the bonding layer.

9. Method in accordance with any one of claims 5 to 8, **characterized in that** the deposition rate decreases at the end of the deposition process of the bonding layer.

10. Method in accordance with any one of claims 1 to 9, **characterized in that** the structural material is Titanium and/or a Titanium alloy, preferably in a thickness between 10 µm and 2 mm.

11. Method in accordance with any one of claims 1 to 10, **characterized in that** the structural material is applied by electrodeposition techniques or 3D printing methods.

12. Method in accordance with any one of claims 1 to 11, **characterized in that** the structural layer is applied by pulsed electrodeposition, in particular with pulse frequencies of less than 900 Hz and/or a deposition rate of at least 8 µm/h, and preferably of more than 80 µm/h.

13. Mirror comprising
a reflecting layer;
a bonding layer; and
a structural layer.

14. Mirror in accordance with claim 13, **characterized in that** the reflecting layer is a Gold, Iridium, Rhodium or Nickel layer and/or that the bonding layer is a Nickel layer, a Nickel Cobalt layer or a Nickel alloy layer and/or that the structural layer is a Titanium and/or Titanium alloy layer.

15. Mirror in accordance with claim 13 or 14, **characterized in that** the structural layer has a minimum thickness of 10 µm, and preferably up to 2 mm.
